Europäisches Patentamt

European Patent Office

Office européen des brevets

(11) Publication number: **0 263 643**
**A2**

## (12) EUROPEAN PATENT APPLICATION

(21) Application number: 87308691.2

(51) Int. Cl.⁴: **B65G 53/46**

(22) Date of filing: 30.09.87

(30) Priority: 06.10.86 GB 8623970

(43) Date of publication of application:
**13.04.88 Bulletin 88/15**

(84) Designated Contracting States:
**AT BE CH DE ES FR GB IT LI LU NL SE**

(71) Applicant: **International Ferry Freight Limited**
**Tivoli House South Street**
**Hull HU1 3QN North Humberside(GB)**

(72) Inventor: **Dudding, Sheron Leslie**
**Peartree House Broomfleet**
**Brough North Humberside(GB)**

(74) Representative: **Ranson, Arthur Terence et al**
**W.P. Thompson & Co. Coopers Building**
**Church Street**
**Liverpool L1 3AB(GB)**

(54) **A coupling device.**

(57) A coupling device for use in coupling the discharge outlet pipe (19) of a container to a discharge pump (14). The coupling device comprises a housing (1) defining a discharge compartment (3) which is open at the bottom and closed at the top by a diaphragm (5) having a resiliently deformable aperture (6) therein. In use, the opening at the bottom of the discharge compartment is adapted to be connected to the inlet port of the discharge pump (14) and the resiliently deformable aperture (6) in the diaphragm (5) is adapted to receive the container discharge outlet pipe (19) therein.

FIG.1

## "A COUPLING DEVICE"

The present invention relates to a coupling device for use in coupling the discharge outlet pipe of a container or tanker to a discharge pump, to facilitate rapid discharge of the contents of the container or tanker. The coupling device is especially suited for use with a rotary valve air seal discharging from a container or tanker, granular, particulate or powdered materials.

Bulk granular, particulate or powdered materials are conveniently transported in containers or tankers which can be carried by road, sea or rail. Owing to the fluid nature of these materials they can be discharged from a container by the simple expedient of opening a discharge port near the floor of one end of the container and raising the opposite end of the container to allow the material to flow out of the discharge port under gravity. Unfortunately though, the rate at which material flows from the container under gravity is not easily controlled. Accordingly, it is common practice to connect a rotary valve seal to the discharge port of the container. By way of explanation a rotary valve seal comprises a plurality of vanes equi-spaced about a rotatable axle to define a V-shaped compartment between each adjacent pair of vanes. This assembly is mounted in a housing which is open at the top to define an inlet port through which material can enter the uppermost compartment, and which comprises towards the bottom a compressed air inlet and a discharge port positioned at opposite ends of the lowermost compartment. As the multi-vane assembly is rotated it picks up material in the uppermost compartment and discharges material from the lowermost compartment by blowing it out through the discharge port.

As indicated above, as the lowermost compartment passes between the blower inlet and the discharge port the material in it is expelled under pressure. However, the vanes are moving relatively fast and a volume of high pressure air will usually ramain in each compartment, together with a residual quantity of material, as it passes the lowermost position. If this volume of high pressure air is allowed to reach the inlet port it will be vented into the container discharge port, causing a blowback of material and inhibiting the passage of material into the compartment. Accordingly, the compartment must be vented before it reaches the inlet port. To this end, a venting port is provided in the side of the housing before the inlet port and to prevent any residual material in the compartment being expelled to atmosphere a cloth filter is provided across its mouth. Unfortunately, these cloth filters are prone to leakage in the initial period of their use and eventually become clogged.

Unless the connection between the container discharge outlet and the rotary valve seal inlet port forms a tight seal material may leak therebetween. This is undesirable, particularly where the material being discharged is hazardous. Of course, it is always possible to use an elaborate connection between the discharge outlet and inlet port which prevents leakage of material, but such connectors are complex in construction and cannot readily be transferred from one container to another. Moreover, the connector must be able to accommodate changes in the relative positions of the container discharge port and the rotary valve seal as the container is tipped to bring material towards its discharge port.

It is an object of the present invention to provide a coupling device for use in coupling the discharge outlet pipe of a container or tanker loaded with granular, particulate or powdered material to a rotary valve seal in which the abovementioned disadvantages are obviated or substantially mitigated.

In order to prevent material contaminating the interior of the container making it necessary to clean it out after each new load, it is known to provide a polythene liner inside the container. The liner comprises a plurality of filling sleeves in the top through which the liner can be filled and a discharge sleeve at the bottom through which the liner can be emptied.

It is a further object of the present invention to provide a liner which is especially, although not exclusively, suited for use with the coupling device of the present invention.

According to the present invention there is provided a coupling device for use in coupling the discharge outlet pipe of a container to a discharge pump comprising a housing defining a discharge compartment which is open at the bottom and closed at the top by a diaphragm having a resiliently deformable aperture therein, wherein, in use, the opening at the bottom of the discharge compartment is adapted to be connected in direct communication with the inlet port of a discharge pump and the resiliently deformable aperture in the diaphragm is adapted to receive the container discharge outlet pipe therein.

Preferably, the housing also defines a venting compartment which is adapted in use to be connected in direct communication with a high pressure air vent in the discharge pump and comprises an opening to atmosphere therein.

In use, the coupling device of the present invention is particularly suited for use with a rotary valve seal In a rotary valve seal high pressure air is vented through the inlet port as each material carrying compartment therein reaches the leading edge of the inlet port. Accordingly, the venting compartment is arranged to be over, and is open to, the leading edge of the rotary valve seal inlet port, and the discharge compartment is positioned immediately after the venting compartment with the open side thereof over the remaining area of the inlet port. As the high pressure air in each rotary valve seal compartment may be expelled through a relatively small opening the opening to the venting compartment can be quite small and need not impinge unduly on the overall size of the rotary valve seal inlet port through which material enters the rotary valve seal compartments through the discharge compartment.

Preferably, the diaphragm is a rubber diaphragm.

Conveniently, the diaphragm is secured in place over the top of the housing by means of a detachable frame. This enables a diaphragm to be easily removed and replaced when it becomes worn.

In use, when the discharge outlet pipe of a container is received in the resiliently deformable aperture within the diaphragm, the edge of the aperture is stretched and nips the sides of the pipe to form a tight seal therewith. This seal is further enhanced by the internal pressure within the discharge compartment which tends to press the inwardly folded edge of the aperture into engagement with the sides of the pipe and prevent a blowout from occurring. Owing to the resiliency of the diaphragm it can easily accommodate movement of the container discharge outlet pipe into the discharge compartment, as the container is tipped to bring material towards the outlet pipe; yet it is a simple and relatively unsophisticated form of seal. It will be readily apparent that the outlet pipe can easily and quickly be disengaged from the aperture in the diaphragm.

Preferably, the housing is secured in position over the rotary valve seal inlet port by means of cam lock clamps which engage with a lip of the rotary valve blower.

Preferably, a rubber gasket is provided between the bottom of the housing and the sides of the rotary valve seal inlet port to form an effective seal therebetween.

Preferably, the opening to atmosphere in the venting compartment is returned to the interior of the container. Preferably, a valve is provided in the return to the container to prevent any back flow of air or material to the venting compartment. Where the material is contained within a liner in the container the valve comprises a flap valve in the liner.

An embodiment of the present invention will now be described, by way of example, with reference to the accompanying drawings, in which:

Fig. 1 shows a perspective view of a coupling device according to the present invention;

Fig. 2 shows bottom plane view of the coupling device of Fig. 1;

Fig. 3 shows a schematic view of a coupling device according to the present invention connected between the outlet pipe of a container and a rotary valve blower; and

Fig. 4 shows a schematic view of a container liner bag which is especially suited for use with the coupling device of the present invention.

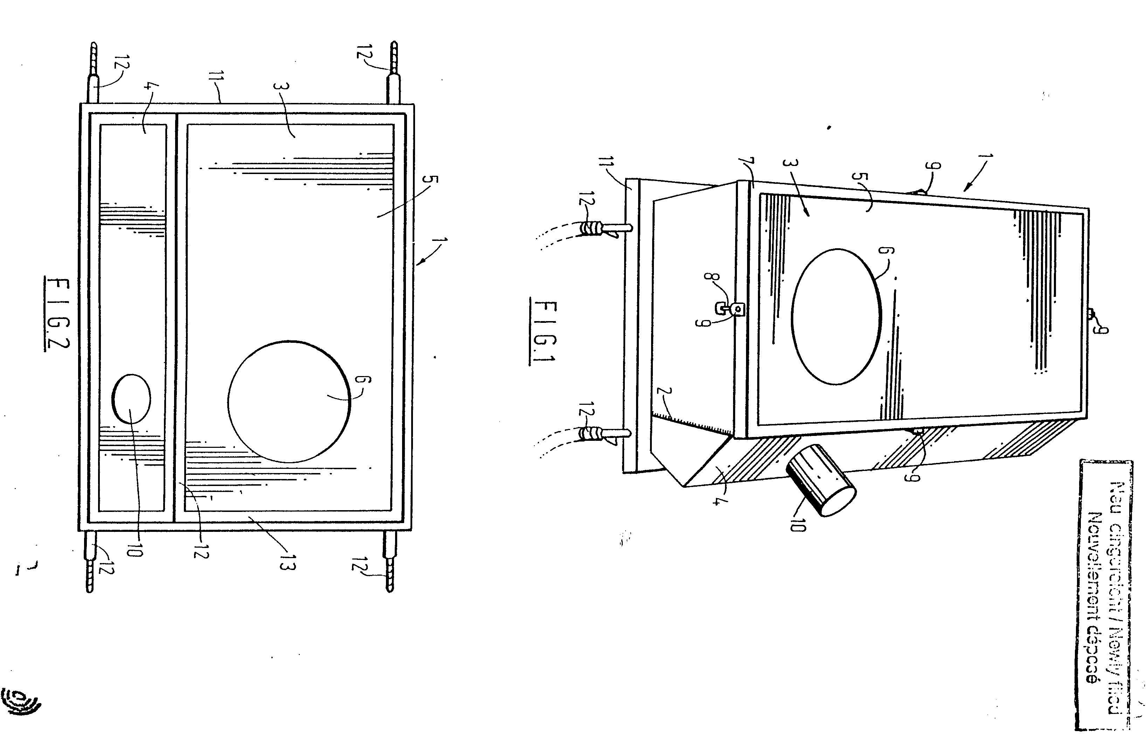

Referring to Figs. 1 and 2 of the accompanying drawings the coupling device comprises a rectangular housing 1 which is divided by an internal wall 2 into two separate compartments 3 and 4. The bottom of the housing 1 is open to afford direct communication with both compartments 3 and 4. The top of the compartment 3 is closed by a rubber diaphragm 5 which has an aperture 6 approximately in the middle thereof. The rubber diaphragm 5 is secured in place on the housing 1 by rectangular frame 7 which fits around the outside of the upper edge of the housing 1 and is secured in place by bolts 8 which each engage through an adjacent pair of lugs 9 on the sides of the housing 1 and the frame 7. The compartment 4 also has another opening in it, beside the opening through the bottom of the housing 1, which is formed by pipe 10.

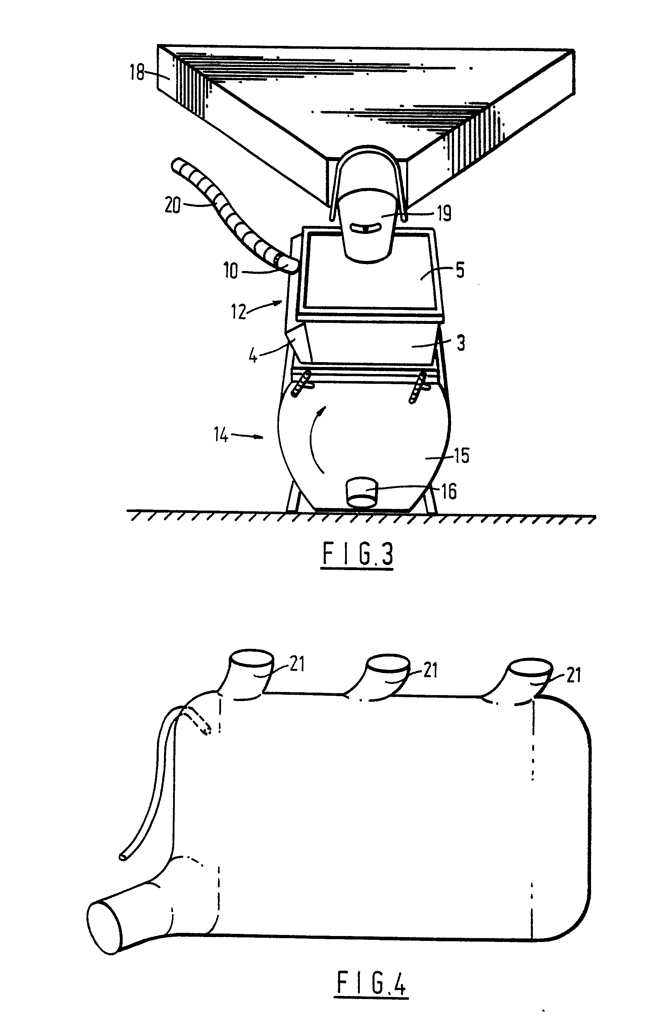

Around the bottom of the housing 1 is provided a flange 11 which carries four cam lock clamps 12. In use, the cam lock clamps 12 secure the housing 1 to a corresponding flange around the inlet port of a rotary valve seal (see Fig. 3). In order to ensure a good seal between flange 11 and the flange of the rotary valve seal, a wire bead 13 is welded around the perimeter of the flange 11, which presses into a rubber gasket positioned over the flange of the rotary valve seal when the cam lock clamps 12 are engaged. The wire bead 13 also extends along the bottom of the internal wall 2 and engages with a corresponding portion of the gasket carried by a dividing wall in the mouth of the inlet port of the rotary valve seal.

It will be seen from Fig. 2 that the width of the opening to compartment 4 is much less than that of compartment 3. In this respect, compartment 4 defines a venting compartment for venting high pressure air from the rotary valve seal, whilst compartment 3 defines a discharge compartment through which material from a container or tanker is discharged into the rotary valve seal. This will become more apparent when the operation of the coupling device is described with reference to Fig. 3 of the accompanying drawings.

Referring now to Fig. 3 there is shown a rotary valve seal 14. Within the rotary valve seal 14 is provided a multi-vane assembly mounted on a rotatable axle which runs axially within a housing 15. The top of the housing 15 is open to define a high pressure air vent and inlet port combined. The high pressure air vent side of the opening is on the leading side of the opening in the direction of vane rotation, whilst the inlet port is on the lagging side. Towards the bottom of the rotary valve seal 14 are provided a discharge outlet 16 and a compressed air blower inlet (not shown) at the front and rear of the housing 15, respectively, in axial alignment. The discharge outlet 16 and compressed air blower inlet are are in communication with each other through the compartment defined between the lowermost pair of adjacent vanes.

Mounted over the opening in the top of the housing 15 is a coupling device 17 embodying the present invention. Above the coupling device 17 is a tun dish 18 which is connected to the discharge outlet of a container which is connected to a discharge pipe 19. The discharge pipe 19 is secured to the tun dish 18 by clamping arms and to ensure a good seal between the adjacent surfaces of the tun dish 18 and the discharge pipe 19 a wire bead and gasket arrangement, similar to that used between the coupling device 17 and the housing 15, is provided. Within the discharge pipe 19 a flow control valve is provided. This free end of the discharge pipe 19 is received in the aperture in the rubber diaphragm 5 over the top of the discharge compartment 3. The rubber diaphragm nips the sides of the discharge pipe 19 and forms a tight seal therewith. The pipe 10 from the venting compartment is returned by a flexible pipe 20 to the inside of the container 18.

Operation of the coupling device will now be described.

In order to discharge a granular, particulate or powdered material from the container 18, the far end of the container from the discharge pipe 19 is raised to tip the material towards the discharge pipe 19. This action also ensures that the free end of the discharge pipe 19 is brought down to the level of the rubber diaphragm 5 for insertion into the aperture therein.

Once the rotary valve seal 14 is switched on the vanes rotate inside the housing 15 and the compartments defined between adjacent pairs of vanes pass under the inlet port where material drops in. When a vane compartment reaches the bottom of the housing 15 it passes between the discharge outlet 16 and compressed air blower inlet, and material is expelled from the compartment through the discharge outlet 16 under the action of the stream of high pressure air from the blower. inlet. The vanes rotate relatively fast and as a result a volume of high pressure air will remain in the compartment as it passes beyond the discharge outlet 16, together with a residual amount of material. If this compartment were to be vented back into the container discharge pipe 19 it would inhibit the ability of the compartment to draw in material, but before the compartment reaches the discharge compartment 3 it passes the venting compartment 4 allowing the high pressure air to be exhausted into the flexible pipe 20 and back into the top of the container 18. Any residual material in the exhausted air is also carried back into the container which avoids any possibility of it leaking to atmosphere.

Referring to Fig. 4 of the accompanying drawings there is shown a modified container liner which is especially, although not exclusively suited for use with a coupling device embodying the present invention. Generally, container liners are used to prevent contamination of the interior of a container. This allows a container to be used for different material without it being necessary to clean out the interior of the container after each new load, by the simple expedient of changing liners. Conventional liners comprise a plurality of filling sleeves at the top through which the liner can be filled and a discharge sleeve at the bottom through which it can be emptied. In the modified liner of Fig. 4 the filling and discharge sleeves at the top and bottom of the liner are present and shown by references 21 and 22, respectively. In addition, a high pressure air return is provided, in the form of a flexible tube 23 of polythene which extends from the exterior to the interior of the liner. This tube 23 can be connected to the flexible pipe 20 to allow high pressure air from the venting compartment 4 to be returned to the interior of the liner, together with any residual material it carries. To prevent any back flow of material through the flexible tube 23 the end thereof which opens into the liner is extended to define a flap valve 24. Normally, under its own weight, the flap valve 24 will hang downwards closing the flexible tube 23 and preventing material passing out from the liner through it. However, when high pressure air is passed through it, as from the venting compartment, it will inflate the flap valve 24, opening it and allowing air and residual material to pass through into the liner.

## Claims

1. A coupling device for use in coupling the discharge outlet pipe (19) of a container to a discharge pump (14) characterised by a housing (1) comprising a discharge compartment (3) which is open at the bottom and closed at the top by a diaphragm (5) having a resiliently deformable aperture (6) therein, wherein, in use, the opening at the bottom of the discharge compartment (3) is adapted to be connected to the inlet port of the discharge pump (14) and the resiliently deformable aperture (6) in the diaphragm (5) is adapted to receive the container discharge outlet pipe (19) therein.

2. A coupling device according to claim 1, characterised in that the housing (1) comprises a venting compartment (4) which is adapted, in use, to be connected to a high pressure air vent in the discharge pump (14) and comprises an opening (10) to atmosphere therein.

3. A coupling device according to claim 2, characterised in that the opening (10) in the venting compartment (4) is adapted, in use, to be returned to the interior of the container.

4. A coupling device according to claim 3, characterised in that a valve is provided in the return to the container to prevent any back flow of air or material to the high pressure air vent in the venting compartment (4).

5. A coupling device according to claim 2, 3 or 4, characterised in that the coupling device is adapted for use with a rotary valve seal discharge pump in which high pressure air is vented through the inlet port as each material carrying compartment therein reaches the leading edge of the inlet port and the venting compartment (4) is positioned over, and is open to, the leading edge of the rotary valve seal inlet port, and the discharge compartment (3) is positioned immediately after the venting compartment with the open side thereof over the remaining area of the inlet port.

6. A coupling device according to any preceding claim, characterised in that the diaphragm (5) is a rubber diaphragm.

7. A coupling device according to any preceding claim, characterised in that the diaphragm (5) is secured in place over the top of the housing by means of a detachable frame (7).

8. A coupling device according to any preceding claim, characterised in that the housing (1) is adapted to be secured in position over the inlet port of the discharge pump (14) by means of cam lock clamps (12).

9. A coupling device according to any preceding claim, characterised in that a rubber gasket is provided between the bottom of the housing (1) and the sides of the inlet port of the discharge pump (14) to form an effective seal therebetween.

F I G.1

F I G.2

F I G. 3

F I G. 4